# FASCICULE DE BREVET EUROPEEN

(11) **EP 2 950 167 B1**
(45) Date de publication et mention de la délivrance du brevet: **27.07.2016**
(21) Numéro de dépôt: 14170036.9
(22) Date de dépôt: 27.05.2014
(51) Int. Cl.: G04B 19/30

(54) **Aiguille d'affichage lumineuse pour objet portable tel qu'une montre ou un instrument de mesure**
Leuchtzeiger zum Anzeigen für tragbaren Gegenstand wie Armbanduhr oder Messinstrument
Luminous display hand for portable object such as a watch or a measuring instrument

(43) Date de publication de la demande: 02.12.2015
(73) Titulaire: The Swatch Group Research and Development Ltd., 2074 Marin (CH)
(72) Inventeur: Tortora, Pierpasquale, 2000 Neuchâtel (CH)
(74) Mandataire: Supper, Marc

(56) Documents cités:
- WO-A1-97/28424
- FR-A1- 2 393 273
- GB-A- 2 004 065
- GB-A- 2 233 478
- KR-A- 20110 048 807
- US-A- 2 363 763

## Description

### Domaine de l'invention

La présente invention concerne une aiguille d'affichage lumineuse pour un objet portable. La présente invention concerne en particulier une aiguille d'affichage lumineuse pour une pièce d'horlogerie telle qu'une montre-bracelet ou un appareil de mesure à affichage analogique.

### Arrière-plan technologique de l'invention

Les aiguilles de montre sont fabriquées avec des tolérances serrées. Le trou de l'aiguille pour le passage du canon est en général réalisé avec des précisions de l'ordre du micromètre. Cette précision est nécessaire pour pouvoir garantir un chassage correct de l'aiguille sur son axe. Les aiguilles sont en général réalisées à partir d'une feuille métallique dont l'épaisseur n'excède pas quelques centaines de micromètre. Pour réduire l'épaisseur de la montre, la distance entre les aiguilles et la glace de la montre n'excède habituellement pas un millimètre, tandis que la distance qui sépare deux aiguilles coaxiales, par exemple l'aiguille des heures et celle des minutes, est de l'ordre d'une fraction de millimètre.

Les aiguilles d'une montre jouent bien sûr un rôle fonctionnel, par exemple indiquer l'heure courante, mais elles jouent également un rôle décoratif en contribuant largement à l'aspect esthétique de la montre qu'elles équipent. A cet effet, les aiguilles doivent répondre à des critères stricts. Une technique bien connue dans le monde horloger pour permettre aux aiguilles d'être visibles dans le noir consiste à revêtir la surface des aiguilles orientée du côté de l'utilisateur d'une couche de matériau phosphorescent. Un exemple d'un tel matériau est un pigment photoluminescent non radioactif commercialisé par la société japonaise Nemoto & Co., Ltd. sous la marque enregistrée Super-Luminova®. Ce pigment peut aussi être utilisé pour revêtir les index horaires du cadran de la montre. De jour, la couche de matériau phosphorescent absorbe l'énergie lumineuse. Cette énergie lumineuse est ensuite restituée de nuit par la couche de matériau phosphorescent sous forme de rayonnement lumineux. Cette technique d'illumination des aiguilles d'une montre est assez commode dans la mesure où le fonctionnement de la couche de matériau phosphorescent est totalement passif et ne nécessite donc, pour son fonctionnement, l'actionnement d'aucun dispositif mécanique ou électrique, ni prélèvement d'énergie qui serait fournie par la montre. Cette technique d'illumination des aiguilles d'une montre présente toutefois également certains inconvénients au premier rang desquels on peut citer le fait que la couche de matériau phosphorescent nécessite d'être préalablement éclairée par une source de lumière avant de pouvoir émettre de l'énergie lumineuse. De même, le phénomène de réémission de lumière par effet de phosphorescence est limité dans le temps, de sorte qu'au fur et à mesure que la couche phosphorescente relâche l'énergie lumineuse qu'elle a stockée, sa luminosité décroît. Les aiguilles revêtues d'une couche de matériau phosphorescent n'ont donc pas un aspect constant. Enfin, la gamme de matériaux phosphorescents disponibles sur le marché est limitée, de sorte que la plupart des montres dans lesquelles de tels matériaux sont utilisés finissent par avoir le même aspect dans l'obscurité et même en plein jour.

A titre de variante de la couche phosphorescente, on peut envisager d'utiliser des techniques d'illumination actives dans lesquelles des sources de lumière discrètes sont utilisées pour éclairer les aiguilles d'une montre. A titre d'exemple, il est possible d'intégrer dans la montre une source de lumière ultraviolette, de façon que la radiation émise vienne exciter la matière fluorescente qui recouvre les aiguilles. Un tel mode de réalisation présente cependant également des inconvénients. D'une part, les sources de lumière ultraviolettes, également appelées sources de lumière noire, émettent une certaine quantité de lumière visible, de sorte que l'utilisateur est susceptible de percevoir un halo de lumière à l'endroit où la source de lumière est implantée. D'autre part, étant donné que les aiguilles sont mobiles par rapport à la source de lumière ultraviolette, elles ne reçoivent pas toujours la même quantité de lumière ultraviolette, de sorte que leur luminosité peut varier.

Le document KR 2011 0048807 A décrit une aiguille d'affichage lumineuse pour un objet portable, l'objet portable comprenant un bâti dans lequel est logée une source d'alimentation en énergie électrique, l'aiguille comportant un guide de lumière dans lequel est ménagé un trou pour le passage d'un axe d'entraînement, et un logement pour l'hébergement d'une source de lumière qui injecte de la lumière dans le guide de lumière, la source de lumière comprenant un premier et un second pôles, le premier pôle de la source de lumière étant relié à la source d'alimentation via l'axe d'entraînement de l'aiguille, et le second pôle de la source de lumière étant relié à la source d'alimentation via le bâti de l'objet portable. Dans l'objet décrit dans ce document il n'est pas possible de loger la source de lumière dans la partie indicatrice de l'aiguille d'affichage.

### Résumé de l'invention

La présente invention a pour but de remédier aux inconvénients susmentionnés ainsi qu'à d'autres encore en procurant système d'affichage avec aiguille lumineuse pouvant être illuminée à la demande de l'utilisateur, selon une grande variété de couleurs et en respectant les contraintes dimensionnelles et esthétiques auxquelles elle est soumise.

A cet effet, la présente invention concerne un système d'affichage comportant au moins une aiguille d'affichage lumineuse pour un objet portable conformément à la revendication 1 annexée.

Grâce à ces caractéristiques, la présente invention procure un système d'affichage avec aiguille d'affichage lumineuse pour un objet portable, par exemple une montre ou un instrument de mesure, dont l'aspect demeure constant au fil du temps. Par ailleurs, la palette de couleurs offerte par les sources de lumière ponctuelles telles que des diodes électroluminescentes est très étendue. Il est donc possible de personnaliser l'aspect de l'aiguille et donc de l'objet portable, par exemple une montre-bracelet, équipé de cette aiguille, ce qui permet de se démarquer de la concurrence. Enfin, la source de lumière ponctuelle est disposée dans un logement ménagé dans le guide de lumière et non pas dans l'axe d'entraînement de cette aiguille, ce qui simplifie considérablement la conception d'une telle aiguille.

Selon une autre caractéristique de l'invention, la connexion électrique entre la pièce support et le bâti de l'objet portable se fait par frottement.

Selon encore une autre caractéristique de l'invention, la pièce support est fixée sur la seconde portion de surface du guide de lumière.

Selon encore une autre caractéristique de l'invention, le second pôle de la source de lumière est relié à une masse.

### Brève description des figures

D'autres caractéristiques et avantages de l'invention ressortiront plus clairement de la description détaillée qui suit d'un mode de réalisation de l'invention, cet exemple étant donné à titre purement illustratif et non limitatif seulement en liaison avec le dessin annexé sur lequel :
- la figure 1 est une vue de dessus d'une aiguille d'affichage lumineuse selon l'invention ;
- la figure 2 est une vue en coupe selon la ligne II-II de la figure 1 d'une aiguille d'affichage lumineuse selon l'invention ;
- la figure 3 est une vue en perspective d'une pièce support électriquement conductrice qui porte la source de lumière, et
- la figure 4 est une vue analogue à celle de la figure 2 et montre l'intégration de la source de lumière dans le guide de lumière.

### Description détaillée d'un mode de réalisation de l'invention

La présente invention procède de l'idée générale inventive qui consiste à éclairer une aiguille d'affichage pour un objet portable tel qu'une montre-bracelet ou bien un instrument de mesure au moyen d'une source de lumière de type ponctuel, préférentiellement une diode électroluminescente. Une telle aiguille lumineuse d'affichage présente plusieurs avantages : son aspect ne s'altère pas avec le temps qui s'écoule et, en raison de la large gamme de diodes électroluminescentes existantes, il est possible de personnaliser l'aspect de l'aiguille et donc l'aspect de l'objet portable qui en est équipé, ce qui permet de se distinguer de la concurrence. Par ailleurs, selon un autre avantage de l'invention, la source de lumière est logée dans le guide de lumière et non pas, par exemple, dans l'axe d'entraînement de l'aiguille, ce qui simplifie considérablement la conception d'une telle aiguille de même que son branchement électrique à la source d'énergie électrique logée dans le bâti de l'objet portable.

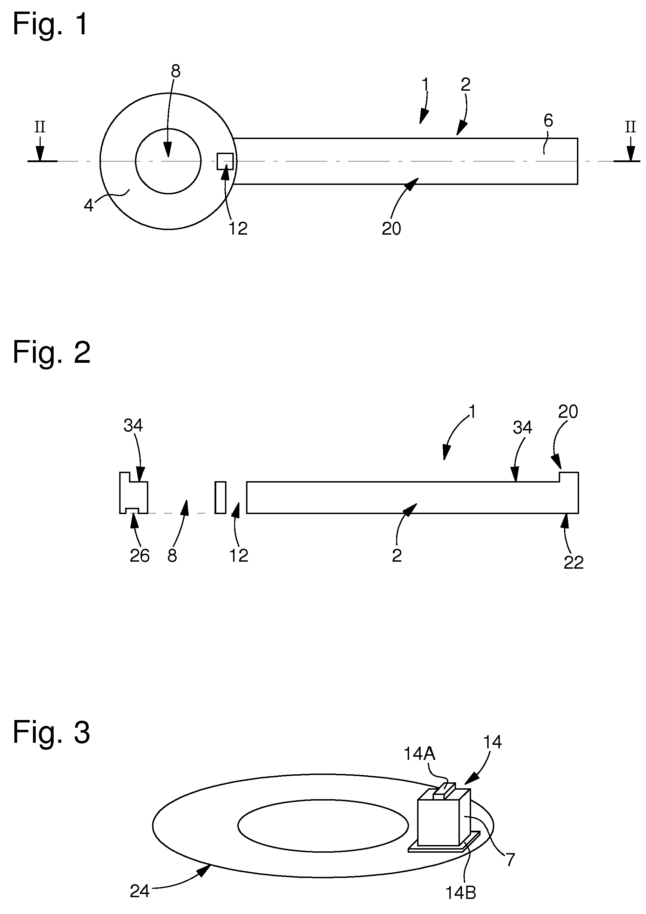

Les figures 1 et 2 sont des vues respectivement de dessus et en coupe selon la ligne II-II de la figure 1 d'une aiguille d'affichage lumineuse 1 selon l'invention. L'aiguille lumineuse d'affichage 1 selon l'invention comprend un guide de lumière désigné dans son ensemble par la référence numérique générale 2 et qui peut être réalisé, au choix, en un matériau transparent, semi-transparent ou translucide tel que du plastique, du quartz, de la silice, du saphir, du rubis ou autre. Le guide de lumière 2 comprend un élément annulaire 4 prolongé par une partie 6 sensiblement rectiligne. L'élément annulaire 4 présente en son centre un trou 8 pour le passage d'un axe d'entraînement 10. Un logement 12 destiné à héberger une source de lumière 14 telle qu'une diode électroluminescente est ménagé dans la partie annulaire 4 du guide de lumière 2, dans la zone où cette partie annulaire 4 est prolongée par la partie rectiligne 6. De la sorte, la source de lumière 14 est capable d'injecter de la lumière par couplage à l'intérieur du guide de lumière 2, et en particulier dans la partie rectiligne 6 de ce guide de lumière 2. Comme expliqué plus en détail ci-dessous, la source de lumière 14 comprend (voir figure 3) des premier et second pôles 14A et 14B pour sa connexion électrique à une source d'alimentation 16 en énergie électrique logée à l'intérieur d'un bâti 18 par exemple d'une montre-bracelet équipée de l'aiguille d'affichage lumineuse selon l'invention. La source d'alimentation 16 en énergie électrique peut être au choix une pile ou une batterie rechargeable. Etant donné que les sources de lumière dont il est question ici ont typiquement une consommation électrique de l'ordre de quelques dizaines à quelques centaines de microampères, on peut même envisager de les alimenter au moyen d'un barillet de montre ou bien d'une génératrice ou d'une dynamo actionnée par l'utilisateur par exemple au moyen d'un bouton-poussoir prévu sur l'objet portable. L'intérêt d'une telle solution réside dans le fait qu'elle permet d'éviter toute solution de stockage de l'énergie reposant sur des phénomènes physicochimiques. On comprendra d'autre part que, même en utilisant des sources de lumière dont la consommation est aussi faible que quelques dizaines de microampères, l'éclairage obtenu est déjà équivalent à celui des matériaux phosphorescents dont sont habituellement revêtues les aiguilles d'affichage lumineuses.

Comme on l'observe sur les figures 1 et 2, le guide de lumière 2 présente une section de forme carrée ou rectangulaire avec une première portion de surface 20 dirigée du côté d'un observateur, et une seconde portion de surface 22 opposée à la première portion de surface 20. Dans l'exemple représenté au dessin, les première et seconde portions de surface 20 et 22 sont planes. Il va cependant de soi que ces portions de surface 20 et 22 peuvent s'écarter de la planéité et être par exemple courbes au moins partiellement ou encore être structurées pour produire les effets optiques désirés. L'épaisseur du guide de lumière 2 considérée entre les première et seconde portions de surface 20 et 22 est typiquement comprise entre 200 et 300 micromètres.

La figure 3 est une vue en perspective d'une pièce support 24 électriquement conductrice qui porte la source de lumière 14. Cette pièce support 24 a une forme d'anneau dont le diamètre intérieur n'empiète pas sur le trou 8 ménagé dans l'élément annulaire 4 du guide de lumière 2, et dont le diamètre extérieur est inférieur au diamètre extérieur de l'élément annulaire 4 du guide de lumière 2. Pour faciliter la fixation, par exemple par collage, de la pièce support 24, on peut prévoir de ménager dans la base de l'élément annulaire 4 une rainure circulaire 26 dans laquelle la pièce support 24 est logée. On comprendra que le positionnement de la source de lumière 14 sur la pièce support 24 est tel que, lorsque la pièce support 24 est fixée sur le guide de lumière 2, la source de lumière 14 fait saillie dans le logement 12 destiné à son hébergement.

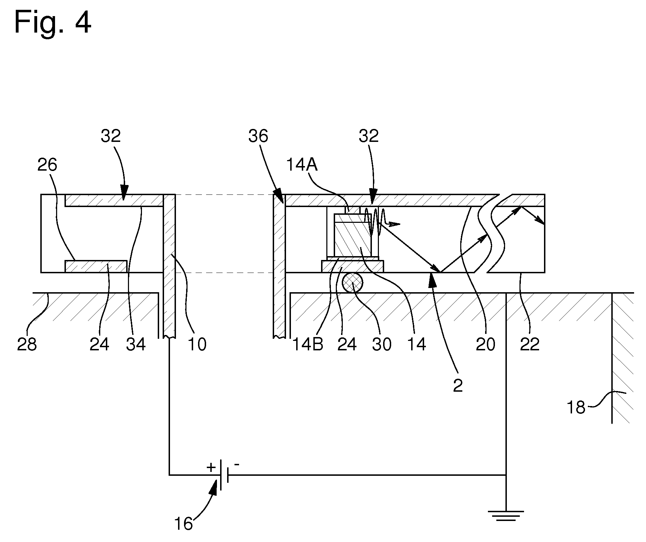

La figure 4 montre l'intégration de la source de lumière 14 dans le guide de lumière 2. Sur cette figure 4, le second pôle 14B de la source de lumière 14 est relié au bâti 18 de l'objet portable et, par conséquent, à la source d'alimentation 16 en énergie électrique via la pièce support 24 électriquement conductrice. A titre d'exemple illustratif et non limitatif seulement, la connexion électrique entre la pièce support 24 et un élément du bâti 18 de l'objet portable tel qu'un cadran 28 au-dessus duquel se déplace l'aiguille d'affichage lumineuse 1 selon l'invention se fait par l'intermédiaire d'une pièce de frottement 30. Cette pièce de frottement 30 sera préférentiellement positionnée le plus près possible de l'axe d'entraînement 10, de manière à réduire le plus possible les effets du frottement sur la rotation de l'aiguille d'affichage lumineuse 1. Quant au premier pôle 14A de la source de lumière 14, il est relié à la source d'alimentation 16 via une pièce d'habillage 32 électriquement conductrice ménagée sur la première portion de surface 20 du guide de lumière 2 et en contact électrique avec l'axe d'entraînement 10. La pièce d'habillage 32 a donc une fonction de connecteur électrique en plus de sa fonction décorative. En effet, la présence de la pièce d'habillage 32 donne au guide de lumière 2 l'aspect d'une aiguille de montre classique. Pour faciliter la fixation, par exemple par collage, de la pièce d'habillage 32, on peut prévoir de ménager dans la première portion de surface 20 une rainure 34 dans laquelle la pièce d'habillage 32 est logée. Par la suite, la pièce d'habillage 32 est en contact électrique par une tranche 36 avec l'axe d'entraînement 10. Cet axe d'entraînement 10, soit réalisé en un matériau électriquement conducteur, soit revêtu extérieurement d'une couche de matériau électriquement conducteur, est ensuite relié à la source d'alimentation 16. Selon une variante préférée mais non limitative, le bâti 18 est relié à une masse et le premier pôle 14A de la source de lumière 14 est relié au pôle positif de la source d'alimentation 16.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées.

### Nomenclature

Aiguille d'affichage lumineuse 1
Guide de lumière 2
Elément annulaire 4
Partie rectiligne 6
Trou 8
Axe d'entraînement 10
Logement 12
Source de lumière 14
Premier et second pôles 14A, 14B
Source d'alimentation 16
Bâti 18
Première portion de surface 20
Seconde portion de surface 22
Pièce support 24
Rainure circulaire 26
Cadran 28
Pièce de frottement 30
Pièce d'habillage 32
Rainure 34
Tranche 36

## Revendications

1. Système d'affichage comportant au moins une aiguille d'affichage lumineuse pour un objet portable, l'objet portable comprenant un bâti (18) dans lequel est logée une source d'alimentation (16) en énergie électrique, l'aiguille (1) comportant un guide de lumière (2) dans lequel est ménagé un trou (8) pour le passage d'un axe d'entraînement (10), et un logement (12) pour l'hébergement d'une source de lumière (14) qui injecte de la lumière dans le guide de lumière (2), la source de lumière (14) comprenant un premier et un second pôles (14A, 14B), le premier pôle (14A) de la source de lumière (14) étant relié à la source d'alimentation (16) via l'axe d'entraînement (10) de l'aiguille (1), et le second pôle (14B) de la source de lumière (14) étant relié à la source d'alimentation (16) via le bâti (18) de l'objet portable, **caractérisée en ce que** le second pôle (14B) de la source de lumière (14) est relié au bâti (18) de l'objet portable via une pièce support (24) électriquement conductrice qui porte la source de lumière (14), et **en ce que** le guide de lumière (2) comprend une première portion de surface (20) dirigée du côté d'un observateur, et une seconde portion de surface (22) opposée à la première portion de surface (20), une pièce d'habillage (32) électriquement conductrice qui relie électriquement la source de lumière (14) à l'axe d'entraînement (10) étant ménagée sur la première portion de surface (20) du guide de lumière (2).

2. Système d'affichage selon la revendication 1, **caractérisée en ce que** la connexion électrique entre la pièce support (24) et le bâti (18) de l'objet portable se fait par frottement.

3. Système d'affichage selon l'une quelconque des revendications 1 ou 2, **caractérisée en ce que** la pièce support (24) est fixée sur la seconde portion de surface (22) du guide de lumière (2).

4. Système d'affichage selon l'une quelconque des revendications 1 à 3, **caractérisée en ce que** le second pôle (14B) de la source de lumière (14) est relié à une masse.

## Patentansprüche

1. Anzeigesystem, das wenigstens einen beleuchteten Anzeigezeiger aufweist, für einen tragbaren Gegenstand, wobei der tragbare Gegenstand einen Rahmen (18) umfasst, in dem eine Quelle (16) für die Ver-sorgung mit elektrischer Energie untergebracht ist, wobei der Zeiger (1) einen Lichtleiter (2), in dem ein Loch (8) für den Durchgang einer Antriebsachse (10) ausgespart ist, und eine Aufnahme (12) zur Anordnung einer Lichtquelle (14), die Licht in den Lichtleiter (2) einspeist, aufweist, wobei die Lichtquelle (14) einen ersten und einen zweiten Pol (14A, 14B) umfasst, wobei der erste Pol (14A) der Lichtquelle (14) über die Antriebsachse (10) des Zeigers (1) mit der Versorgungsquelle (16) verbunden ist und der zweite Pol (14B) der Lichtquelle (14) über den Rahmen (18) des tragbaren Gegenstands mit der Versorgungsquelle (16) verbunden ist, **dadurch gekennzeichnet, dass** der zweite Pol (14B) der Lichtquelle (14) mit dem Rahmen (18) des tragbaren Gegenstands über ein elektrisch leitendes Trägerteil (24) verbunden ist, das die Lichtquelle (14) trägt, und dass der Lichtleiter (2) einen ersten Oberflächenabschnitt (20), der zur Seite eines Beobachters gerichtet ist, und einen zweiten Oberflächenabschnitt (22) gegenüber dem ersten Oberflächenabschnitt (20) umfasst, wobei in dem ersten Oberflächenabschnitt (20) des Lichtleiters (2) ein elektrisch leitendes Verkleidungsteil (32) vorgesehen ist, das die Lichtquelle (14) mit der Antriebsachse (10) elektrisch verbindet.

2. Anzeigesystem nach Anspruch 1, **dadurch gekennzeichnet, dass** die elektrische Verbindung zwischen dem Trägerteil (24) und dem Rahmen (18) des tragbaren Gegenstands durch Reibung erfolgt.

3. Anzeigesystem nach einem der Ansprüche 1 oder 2, **dadurch gekennzeichnet, dass** das Trägerteil (24) an dem zweiten Oberflächenabschnitt (22) des Lichtleiters (2) befestigt ist.

4. Anzeigesystem nach einem der Ansprüche 1 bis 3, **dadurch gekennzeichnet, dass** der zweite Pol (14B) der Lichtquelle (14) mit Masse verbunden ist.

## Claims

1. Display system including at least one luminous display hand for a portable object, the portable object including a frame (18) which houses an electrical energy supply source (16), the hand (1) including a light guide (2) in which is arranged a hole (8) for the passage of a drive arbor (10), and a housing (12) for accommodating a light source (14) that injects light into the light guide (12), the light source (14) including first and second poles (14A, 14B), the first pole (14A) of the light source (14) being connected to the energy supply source (16) via the drive arbor (10) of the hand (1), and the second pole (14B) of the light source (14) being connected to the energy supply source (16) via the frame (18) of the portable object, **characterized in that** the second pole (14B) of the light source (14) is connected to the frame (18) of the portable object via an electrically conductive support piece (24) that carries the light source (14), and **in that** the light guide (2) includes a first surface portion (20) facing an observer, and a second surface portion (22) opposite the first surface portion (20), an electrically conductive external part (32), that electrically connects the light source (14) to the drive arbor (10), being arranged on the first surface portion (20) of the light guide (2).

2. Display system according to claim 1, **characterized in that** the electrical connection between the support piece (24) and the frame (18) of the portable object occurs by friction.

3. Display system according to any of claims 1 or 2, **characterized in that** the support piece (24) is fixed to the second surface portion (22) of the light guide (2).

4. Luminous display hand according to any of claims 1 to 3, **characterized in that** the second pole (14B) of the light source (14) is connected to ground.
